# EUROPÄISCHE PATENTSCHRIFT

(11) **EP 3 672 774 B1**
(45) Veröffentlichungstag und Bekanntmachung des Hinweises auf die Patenterteilung: **22.02.2023**
(21) Anmeldenummer: 18758589.8
(22) Anmeldetag: 20.08.2018
(51) Int. Cl.: B29C 31/04, B29C 43/34, B29C 43/18, B29C 43/36

(54) **VERFAHREN UND VORRICHTUNG ZUM AUFBRINGEN EINER DICHTUNGSMASSE AUF DEN BODEN UND DIE INNENSEITE EINER RINGFÖRMIGEN WAND EINES DECKELS FÜR BEHÄLTER**
METHOD AND DEVICE FOR APPLYING A SEALING COMPOUND TO THE BASE AND INNER SIDE OF AN ANNULAR WALL OF A COVER FOR CONTAINERS
PROCÉDÉ ET DISPOSITIF POUR APPLIQUER UNE MASSE D'ÉTANCHÉITÉ SUR LE FOND ET LE CÔTÉ INTÉRIEUR D'UNE PAROI ANNULAIRE D'UN COUVERCLE DE RÉCIPIENT

(30) Priorität: 21.08.2017 DE 102017119032
(43) Veröffentlichungstag der Anmeldung: 01.07.2020
(73) Patentinhaber: Saeta GmbH & Co. KG, 22880 Wedel (DE)
(72) Erfinder: LENZ, Carsten, 25436 Uetersen (DE)
(74) Vertreter: Hauck Patentanwaltspartnerschaft mbB
(86) Internationale Anmeldenummer: PCT/EP2018/072451
(87) Internationale Veröffentlichungsnummer: WO 2019/038237

(56) Entgegenhaltungen:
- EP-A1- 3 162 729
- EP-A2- 0 219 265
- WO-A1-2011/023399

## Beschreibung

Die Erfindung bezieht sich auf ein Verfahren zum Aufbringen einer Dichtungsmasse auf den Boden und die Innenseite einer ringförmigen Wand eines Deckels für Behälter nach Anspruch 1 oder 2. Die Erfindung bezieht sich auch auf eine Vorrichtung zum Aufbringen einer Dichtungsmasse auf den Boden und die Innenseite einer ringförmigen Wand eines Deckels für Behälter nach Anspruch 6 oder 7.

Aus DE 10 2009 040 802 B4 bzw. WO 2011/023399 A1 ist ein Verfahren gemäß dem Oberbegriff des Anspruchs 1, ein Verfahren mit dem ersten und dritten Schritt des Anspruchs 2 und eine Vorrichtung gemäß den Oberbegriffen der Ansprüche 6 und 7 bekannt. DE 10 2009 040 802 B4 bzw. WO 2011/023399 A1 offenbart ein Verfahren und eine Vorrichtung zum Aufbringen einer Dichtungsmasse auf dem Boden eines Deckels für Behälter, bei dem plastifizierte Dichtungsmasse ringförmig in einen temperierten Ringspalt mit veränderbarer Spaltbreite eingebracht wird. Durch Verringerung der Spaltbreite zu null wird die Dichtungsmasse vollständig aus dem Ringspalt herausgepresst und zum ringförmigen Gebilde geformt. Danach wird das ringförmige Gebilde auf den Deckelboden abgelegt, wobei die Spaltbreite mit so hoher Geschwindigkeit verringert und die Dichtungsmasse mit so hoher Geschwindigkeit ausgepresst wird, dass eine Anhaftung der Schmelze an Spaltkanten sowie an dem Ringspalt benachbarten Flächen vermieden wird.

Die hierzu eingesetzte Vorrichtung wird allgemein als Applikator bezeichnet.

Aus WO 2015/181668 A1 ist ein Applikator bekannt geworden, bei dem Dichtungsmasse über Kanäle und einen Ringspalt eines inneren Formteils ausgepresst wird. Das innere Formteil wird gegen den Boden eines Deckels geführt, wobei ein Spalt freigelassen werden kann. Das innere Formteil ist von einem ringförmigen äußeren Formteil umgeben, das koaxial zum inneren Formteil bewegbar ist und messerartig wirkt, wodurch die aus dem Ringspalt austretende Dichtungsmasse abgetrennt wird. Die Dichtungsmasse wird anschließend durch die Stirnfläche des äußeren Formteils gegen den Deckelboden und teilweise an die Deckelwand gedrückt.

Beim anschließenden Anformen der Dichtungsmasse mithilfe eines Pressstempels besteht die Gefahr, dass die Dichtungsmasse nicht den Übergangsbereich zwischen Deckelboden und Deckelwand ausfüllt und es mithin zu Lufteinschlüssen kommt. Erschwerend ist hierbei der Umstand, dass der einen kleinen Radius aufweisende Übergangsbereich von Deckelwand zum Deckelboden etwas tiefer als der Deckelboden liegt.

Das Beschichten eines Behälterdeckels mit einer Dichtungsmasse an Boden und Deckelwand ist auch in DE 10 2013 008 045.2 oder DE 10 2013 008 045 A1 beschrieben.

Aus EP 0 219 265 A2 ist das Aufbringen eines Dichtrings auf einen Behälterdeckel bekannt, wobei der Deckel vor oder während des Aufbringens des Dichtrings erhitzt wird um das Anhaften des Dichtrings am Deckel zu verstärken. Um das Entweichen von Lufteinschlüssen zu erleichtern, wird vorgeschlagen, das Material des Dichtrings exzentrisch aufzubringen.

Weiterhin ist aus EP 3 162 729 A1 ein Aufbringen von Dichtungsmasse auf einen Metalldeckel bekannt, wobei zum Aufbringen verschiedener Materialschichten zwei Pressvorrichtungen zum Einsatz kommen.

Der Erfindung liegt die Aufgabe zugrunde, ein Verfahren zum Aufbringen einer Dichtungsmasse auf den Boden und die Innenseite einer ringförmigen Wand eines Deckels für Behälter zu schaffen, bei dem Lufteinschlüsse im Übergangsbereich von Deckelboden und -wand vermieden werden.

Diese Aufgabe wird durch die Merkmale von Patentanspruch 1 oder 2 gelöst.

Das erfindungsgemäße Verfahren nach Anspruch 1 besteht lediglich aus zwei Schritten, nämlich dem Aufbringen eines ringförmigen Gebildes auf den Deckelboden und dem Anformen der Dichtungsmasse an Boden und Wand des Deckels. Im ersten Schritt wird mithilfe eines von der Stirnfläche des äußeren Formteils (des Applikators) über einen sich radial nach außen verengenden Spalts zum Deckelboden die Dichtungsmasse unter Vermeidung von Lufteinschlüssen radial nach außen nur bis in den Bereich des Übergangsradius gedrückt. Im zweiten Schritt wird, wie an sich bekannt, die auf diese Weise vorgeformte Dichtungsmasse mithilfe eines Pressstempels sowohl an den Deckelboden als auch die Deckelinnenwand gepresst.

Dadurch, dass dem äußeren Formteil (Abstreifer) des Applikators an der Stirnfläche eine besondere Kontur gegeben wird, werden bei der Erfindung die Applikation eines ringförmigen Gebildes aus Dichtungsmasse und ein Vorformschritt zusammengelegt. Die Kontur der so vorgeformten Dichtungsmasse hat nicht mehr im Querschnitt eine kreisartige Form oder eine angenäherte Kreisform wie in den bekannten Fällen, sondern ist abgeflacht und hat radial außen eine geringe Höhe. Im Querschnitt hat die Oberseite des zweiten ringförmigen Gebildes z.B. Dachform. Sie wird bei der Erfindung vom äußeren Formteil (Abstreifer) des Applikators erzeugt. Durch das erfindungsgemäße Verfahren zum Aufbringen einer Dichtungsmasse auf den Boden und die Innenseite einer ringförmigen Wand werden auf diese Weise Lufteinschlüsse vermieden.

Bei dem Verfahren nach Anspruch 2 sind drei Schritte zum Aufbringen einer Dichtungsmasse auf Boden und Wand des Deckels vorgesehen. In einem ersten Schritt wird ein ringförmiges Gebilde aus Dichtungsmasse mit Hilfe eines Applikators auf dem Deckelboden abgelegt. In einem zweiten Schritt wird das ringartige Gebilde aus plastifizierter Dichtungsmasse mittels eines ringförmigen ersten Pressstempels, der ein inneres Formteil umgibt, gegen den Deckelboden gepresst, wobei mit Hilfe der Stirnfläche des ersten Pressstempels über einen sich radial nach außen zum Deckelboden hin verengenden Spalt die Dichtungsmasse unter Vermeidung von Lufteinschlüssen radial nach außen in dem Bereich des Übergangsradius zwischen Deckelboden und Deckelwand gedrückt wird. In einem dritten Schritt wird das im zweiten Schritt erzeugte zweite ringförmige Gebilde mit Hilfe eines zweiten Pressstempels gegen den Deckelboden und in den Spalt zwischen Deckelwand und zweiten Pressstempel gepresst.

Während im weiter oben beschriebenen erfindungsgemäßen Verfahren die Vorformung des ringartigen Gebildes mit Hilfe des Abstreifers des Applikators erfolgt, wird bei dem zuletzt beschriebenen Verfahren nach der Erfindung ein Zwischen- oder Vorformschritt vorgenommen und zwar mit Hilfe eines ersten Pressstempels, der in seiner Stirnfläche im Querschnitt eine Kontur hat, wie sie in Verbindung mit dem äußeren Formteil (Abstreifer) des Applikators bereits beschrieben wurde. Die hierbei erzielte Wirkung ist die Gleiche wie beschrieben, nämlich die Vermeidung von Lufteinschlüssen im Übergangsbereich zwischen Deckelboden und -wand.

Nach einer Ausgestaltung der Erfindung wird die Dichtungsmasse auf dem Deckelboden über einen im Querschnitt radial nach außen stetig enger werdenden Ringspalt zwischen Stirnfläche und Deckelboden des äußeren Formteils oder des Pressstempels gedrückt. Für die Durchführung des Verfahrens ist es ferner vorteilhaft, wenn zwischen äußerem Formteil (Abstreifer) oder anderem Pressstempel und Deckelwand ein enger Spalt vorhanden ist, der eine dichtende Wirkung entfaltet und verhindert, dass beim Aufbringen des ringförmigen Gebildes und dessen Verformung durch den Abstreifer Material aus dem Übergangsbereich zwischen Boden und Deckelwand nach oben gequetscht wird.

Von Vorteil ist die Anwendung des erfindungsgemäßen Verfahrens auf das an sich bekannte Verfahren, bei dem der ringförmige Pressstempel zwischen einem radial innen vom Pressstempel angeordneten inneren Formteil und einem radial außen vom Pressstempel angeordneten und einen ringförmigen Spalt zum Deckelboden bildenden ringförmigen äußeren Formteil in Richtung des Deckelbodens auf das ringartige Gebilde aus plastifizierter Dichtungsmasse gepresst wird, wobei die plastifizierte Dichtungsmasse in den Spalt und radial außen durch den ringförmigen Spalt auf den Deckelboden und an die sich an den Deckelboden anschließende Deckelwand gepresst wird.

Die Erfindung bezieht sich auch auf eine Vorrichtung zur Durchführung des erfindungsgemäßen Verfahrens gemäß Patentanspruch 6 oder 7. Die Vorrichtung nach Anspruch 6 ist durch folgende Merkmale gekennzeichnet:
- ein Applikator, mit einem gegen den Deckelboden führbaren, Kanäle und einen Austrittsspalt für die Dichtungsmasse aufweisenden inneren Formteil und einem das innere Formteil umgebenden messerartig wirkenden äußeren Formteil, das koaxial zum inneren Formteil axial bewegbar ist zum Abtrennen der aus dem Austrittsspalt austretenden Dichtungsmasse und Andrücken derselben an den Deckelboden mit seiner Stirnfläche,
- eine Pressvorrichtung mit einem zweiten inneren Formteil, das gegen den Deckelboden führbar ist und der von einem ringförmigen Pressstempel umgeben ist, der koaxial zum zweiten inneren Formteil bewegbar ist zum Verpressen der Dichtungsmasse flächig gegen Deckelboden und Deckelwand,
- dadurch gekennzeichnet, dass der Querschnitt der Stirnfläche des äußeren Formteils des Applikators dachförmig ist, mit einer radial inneren Schrägfläche und einer radial äußeren Schrägfläche, wobei zwischen den Schrägflächen eine gerundete Übergangsfläche vorhanden ist, sodass die Dichtungsmasse beim Andrücken der Dichtungsmasse radial nach außen in den Bereich des Übergangsradius R zwischen Deckelboden und Deckelwand gedrückt wird.

Bei der erfindungsgemäßen Vorrichtung nach Anspruch 7 sind folgende Merkmale vorgesehen:
- ein Applikator mit Mitteln zum Aufbringen eines ringförmigen Gebildes auf den Deckelboden,
- eine erste Pressvorrichtung mit einem ersten inneren Formteil, das gegen den Deckelboden führbar und von einem ringförmigen ersten Pressstempel umgeben ist, der koaxial zum zweiten inneren Formteil bewegbar ist zum Verpressen der Dichtungsmasse gegen den Deckelboden, wobei der Querschnitt der Stirnfläche des ersten Pressstempels so geformt ist, dass die Dichtungsmasse beim Verpressen radial nach außen in den Bereich des Übergangsradius R zwischen Deckelboden und Deckelwand gedrückt wird und
- eine zweite Pressvorrichtung mit einem zweiten inneren Formteil, das gegen den Deckelboden führbar und von einem ringförmigen zweiten Pressstempel umgeben ist, der koaxial zum zweiten inneren Formteil bewegbar ist zum Verpressen der Dichtungsmasse flach gegen Deckelboden und Deckelwand.

Nach einer Ausgestaltung der erfindungsgemäßen Vorrichtung ist vorgesehen, dass die Stirnfläche des äußeren Formteils oder des ersten Pressstempels im Querschnitt so geformt ist, vorzugsweise konkav, dass der Ringspalt zwischen Stirnfläche und Deckelboden radial nach außen kleiner wird und der radiale Austritt des Ringspalts in einer unteren Endposition des äußeren Formteils oder anderen Pressstempels nur den Bereich des Übergangsradius überdeckt.

Nach einer Ausgestaltung der Erfindung ist vorgesehen, dass der Austrittsspalt nahe dem unteren Ende des inneren Formteils angeordnet ist und einen relativ großen Querschnitt aufweist und das äußere Formteil so ausgebildet ist, dass die austretende Dichtungsmasse abgeschält wird. Das äußere Formteil wirkt hier weitgehend messerartig, um die austretende Dichtungsmasse abzutrennen und auf den Deckelboden abzulegen. Dieser Vorgang wird vor allen Dingen dadurch ermöglicht, dass zuvor eine antihaftende Beschichtung vorgenommen wird, durch welche das Abtrennen der Dichtungsmasse erleichtert wird. Gleichzeitig ist zumeist der Deckelboden mit einer haftenden Schicht versehen, sodass beim Entfernen des Applikators die Dichtungsmasse am Deckelboden verbleibt.

Alternativ ist erfindungsgemäß vorgesehen, dass der Austrittsspalt nahe dem unteren Ende des inneren Formteils angeordnet ist und einen relativ kleinen Querschnitt aufweist und das äußere Formteil so ausgebildet ist, dass es die austretende Dichtungsmasse abquetscht. Auch hierbei kann eine antihaftende Beschichtung auf den zugeordneten Formteilen vorteilhaft zur Wirkung kommen.

Wie im bekannten Fall können beim Applikator inneres und äußeres Formteil zylindrisch bzw. ringzylindrisch geformt sein. Eine andere Ausgestaltung der Erfindung sieht hierzu vor, dass das innere Formteil unterhalb des Austrittsspalts einen sich nach unten erweiternden konischen Abschnitt aufweist und das äußere Formteil am unteren Ende eine dem konischen Abschnitt angepasste schräge Ringfläche aufweist. Letztere ermöglicht besonders wirksam das Abquetschen der dicht auftretenden Dichtungsmasse.

Eine weitere Ausgestaltung der Erfindung sieht vor, dass das äußere Formteil von einem weiteren ringförmigen Formteil umgeben ist, das axial beweglich an die Deckelwand angrenzt, wenn der Applikator eingeführt ist und die untere Stirnfläche vom äußeren Formteil und vom weiteren Formteil zusammen im Querschnitt eine Fläche bilden, die beim Andrücken der Dichtungsmasse diese radial nach außen in den Bereich des Übergangsradius zwischen Deckelboden und Deckelwand drückt.

Die Erfindung wird nachfolgend anhand von Zeichnungen näher erläutert.

Die Figuren 1-3 zeigen schematisch in verschiedenen Verfahrensstufen das Verpressen von Dichtungsmasse auf Boden und Wand eines Behälterdeckels mithilfe geeigneter Presswerkzeuge nach einer Ausführungsform der Erfindung.

Figur 4 zeigt schematisch die Anwendung des erfindungsgemäßen Verfahrens in einer zweiten Ausführungsform.

Figur 5 zeigt einen vergrößerten Ausschnitt von Figur 4.

Figur 6 zeigt schematisch die Anwendung des erfindungsgemäßen Verfahrens nach der ersten Ausführungsform.

Figur 7 zeigt schematisch die Anwendung des erfindungsgemäßen Verfahrens mit einem alternativen Applikator.

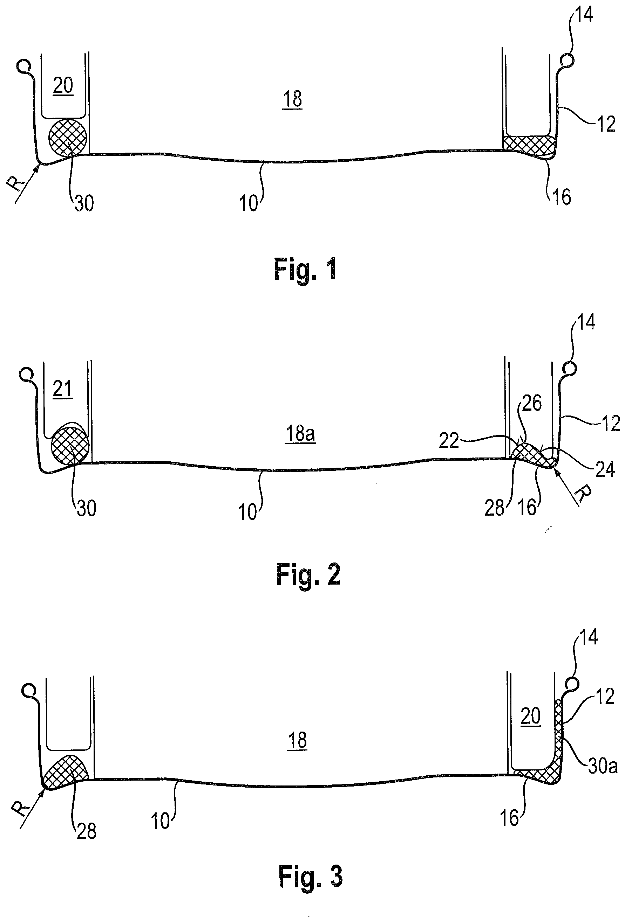

In den Figuren 1-3 ist ein Deckel für einen Behälter gezeigt, beispielsweise für einen Lebensmittelbehälter, wie einen Baby-Foodbehälter oder ähnliches. Der Deckel besitzt einen kreisförmigen Deckelboden 10 und eine ringförmig, beispielsweise kreisringförmig, um den Deckelboden 10 umlaufende Deckelwand 12. An ihrem die Öffnung des Deckels begrenzenden Ende besitzt die Deckelwand 12 eine kreisringförmige Anrollung 14. Der Deckelboden 10 weist einen an die Deckelwand 12 angrenzenden und gegenüber dem übrigen Deckelboden vertieften ringförmigen Übergangsbereich 16 auf. Vom vertieften Bereich 16 zur Deckelwand 12 weist der Deckel einen kleinen Übergangsradius R auf.

In den Figuren 1-3 ist ein sich bis zum Deckelboden 10 erstreckendes inneres Formteil 18 zu erkennen. Zwischen dem inneren Formteil 18 und dem Deckelboden 10 kann wahlweise ein Spalt vorgesehen sein. Um das innere Formteil 18 herum erstreckt sich ringförmig ein äußerer Pressstempel 20. Die beiden Formteile 18, 20 dienen dazu, am Rand des Deckelbodens 10 und an der Innenseite der Deckelwand 12 eine Dichtungsbeschichtung zu erzeugen. In Figur 1 ist eine Ausgangssituation gezeigt, wie sie im Stand der Technik bekannt ist. Vor diesem Schritt wird mithilfe eines geeigneten Applikators, wie etwa in WO 2015/181668 A1 beschrieben, ein ringförmiges Gebilde 30 aus plastifizierter Dichtungsmasse auf den Rand des Deckelbodens 10 aufgelegt (Fig. 1 links). Der Deckel ist hierfür erwärmt. Anschließend bewegt sich der Pressstempel 20 gegenüber dem inneren Formteil 18 nach unten, um die Dichtungsmasse flach an den Deckelboden und an die Deckelwand 12 zu drücken (Figur 1 rechte Seite). In dieser Darstellung ist die Dichtungsmasse erst geringfügig verformt. Man erkennt, dass bei einer weiteren Verformung bei radialer Verdrängung der Dichtmasse im Übergangsbereich des Radius R Luft eingeschlossen werden würde. Diese Lufteinschlüsse bleiben bestehen, wenn bei weiterer Verformung der Dichtmasse diese in den Spalt zwischen Deckelwand 12 und Pressformteil 20 hineingepresst wird.

In Figur 2 ist gezeigt, wie durch ein Vorformverfahren Lufteinschlüsse vermieden werden können. Zu diesem Zweck umgibt ein inneres Formteil 18a ein erster oder Vorformpressstempel 21, der das ringförmige Gebilde 30 aus plastifizierter Dichtungsmasse in einer Weise verformt, wie dies auf der rechten Seite von Figur 2 dargestellt ist. Die Stirnfläche des Pressstempels 21 ist im Querschnitt konkav bzw. dachförmig mit einer inneren Schrägfläche 22 und einer äußeren Schrägfläche 24, die über eine gerundete Fläche 26 verbunden sind. Die Schrägfläche 22 ist die kürzere und die äußere Schrägfläche 24 die längere, wodurch der Scheitel der gekrümmten Fläche 26 gegenüber der Mitte des Rings des Pressstempels 21 radial nach innen versetzt liegt. Mit der derart ausgebildeten Stirnfläche des Pressstempels 21 wird das ringförmige Gebilde 30 zu einem zweiten ringförmigen Gebilde 28 verformt, wie dies auf der rechten Seite von Figur 2 zu erkennen ist. Zwischen dem Boden der Vertiefung 16 und der Schrägfläche 24 des Pressstempels 21 ist ein sich radial nach außen verengender Ringspalt gebildet. In der unteren Endposition des Pressstempels 21 ist der radiale Austritt dieses Spalts in etwa zum Übergangsradius R ausgerichtet. Man erkennt, dass mithilfe einer derartigen Vorformung der Dichtungsmasse der kritische Bereich des Deckels ohne Lufteinschluss mit Dichtmasse ausgefüllt wird, wobei Dichtungsmasse weitgehend in diesem Übergangsbereich verbleibt und nicht etwa in den Spalt zwischen Pressstempel und Wand 12 gequetscht wird. Dieser ringförmige Spalt zwischen Pressstempel 21 und Deckelwand ist relativ klein, um eine Dichtwirkung zu gewährleisten.

In Figur 3 ist die Fertigausformung der Dichtung angedeutet. In Figur 3 links befindet sich der zweite Pressstempel 20 oberhalb des vorgeformten zweiten ringförmigen Gebildes 28, das den kritischen Übergangsradius ausfüllt. In Figur 3 rechts hat der Pressstempel 20 das ringförmige Gebilde 28 zu einer Dichtung 30a ausgeformt, die sowohl den vertieften Bereich 16 als auch den Spalt zwischen Pressstempel 20 und Deckelwand 12 ausfüllt. Auf diese Weise ist eine Dichtung an Deckelboden 10 und Deckelwand 12 erzeugt, die ohne Lufteinschlüsse ist.

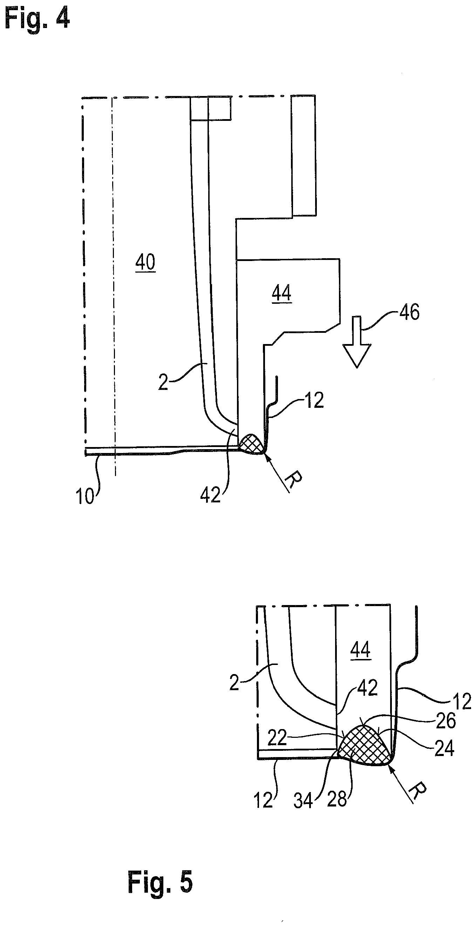

In Figur 4 und 5 ist im Schnitt die rechte Hälfte eines grundsätzlich bekannten Applikators zum Aufbringen eines ringförmigen Gebildes auf den Deckelbodengezeigt, wobei erfindungsgemäß die Dichtungsmasse weitgehend in diesem Übergangsbereich verbleibt und nicht in den Spalt zwischen Pressstempel und Wand 12 gequetscht wird. Es ist dargestellt, wie ein inneres Formteil 40 des Applikators gegen den Boden 10 des bereits weiter oben beschriebenen Deckels (hier ohne Anrollung gezeigt) gehalten wird. Im gezeigten Fall ist ein Spalt zwischen der unteren Fläche des Formteils 40 und dem Deckelboden 10 vorgesehen. Das innere Formteil 40 weist eine Reihe von Kanälen 2 auf (in Figur 4 ist nur einer dargestellt), denen plastifizierte Dichtungsmasse zugeführt wird, die vom oberen Ende des Formteils 40 nach unten geführt wird, bis nahe an das untere Ende des Formteils 40. Am unteren Ende sind die Kanäle 2 radial nach außen abgebogen zu einem sich radial nach außen öffnenden Ringspalt 42 hin. Über diesen Ringspalt kann plastifizierte Dichtungsmasse nach außen austreten in einen Bereich oberhalb des Bodens 10.

Das innere Formteil 40 ist umgeben von einem ringförmigen äußeren Formteil 44 (Abstreifer), das koaxial zum inneren Formteil 40 bewegbar ist, wie durch Pfeil 46 angedeutet und die aus dem Austrittsspalt austretende Dichtungsmasse abtrennt. Die Besonderheit des äußeren Formteils 44 ist, dass seine untere Stirnfläche eine Kontur hat, wie sie in Verbindung mit Figur 2 rechts zum Pressstempel 21 erläutert wurde.

Daher sind die Bezugszeichen in Figur 4 und 5, soweit sie diese Kontur betreffen, die gleichen, wie in Figur 2 rechts. Die Schräg- oder Dachfläche 22 bildet mit der Innenfläche des Formteils 44 eine mehr oder weniger scharfe Kante 34. Diese messerartig wirkende Kante 34 schneidet die aus dem Ringspalt 42 austretende Dichtungsmasse ab, wenn das Formteil 44 sich in Richtung Deckelboden 10 bewegt. Auf dem Deckelboden wird die Dichtungsmasse zum ringförmigen Gebilde 28 gemäß Figur 2 rechts verformt mit dem Ergebnis, dass die Dichtungsmasse bereits beim Applizieren auf den Deckelboden 10 in den Übergangsbereich mit dem Radius R gedrückt wird und somit diesen Bereich ohne Lufteinschlüsse vollständig ausfüllt. Anschließend kann die weitere Verformung zum Beschichten der Deckelwand 12 erfolgen, wie dies in Verbindung mit Figur 3 rechts erläutert wurde.

Der Austrittsspalt der Dichtungsmasse aus dem inneren Formteil liegt vorzugsweise nahe dem unteren Ende des inneren Formteils und kann einen relativ großen oder auch einen relativ kleinen Querschnitt aufweisen. Im ersteren Fall wird die Dichtungsmasse im Wesentlichen abgeschält, während sie im zweiten Fall im Wesentlichen abgequetscht wird. Die Auslegung des Querschnitts des Austrittsspalts und der abtrennenden Kontur des äußeren Formteils muss in Abhängigkeit von den Eigenschaften der Dichtungsmasse ggf. durch Versuche ermittelt werden, wobei der Einsatz von antihaftenden Beschichtungen von großem Vorteil ist.

Es ist ersichtlich, dass beim zuletzt erläuterten Verfahren die Verfahrensschritte Applikation und Vorformen der Dichtungsmasse zusammengelegt sind. Dies geschieht dadurch, dass dem Abstreifer (Formteil 44) des Applikators die Kontur des Vorformpressstempels 21 gemäß Figur 2 gegeben wird.

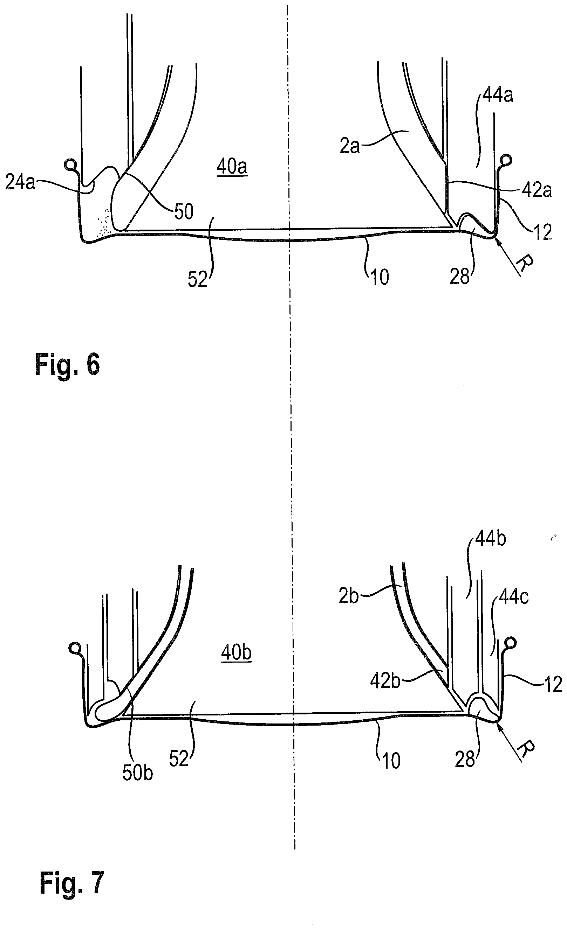

Soweit in Figur 6 ähnliche oder gleiche Teile verwendet werden wie in den Figuren 4 und 5, werden gleiche Bezugszeichen verwendet, die mit "a" versehen sind. Der Deckel entspricht dem nach den Figuren 1 bis 3. Der Austrittsspalt 2a hat einen relativ großen Querschnitt und liegt relativ nahe am unteren Ende des inneren Formteils 40a. Das äußere Formteil 44a hat keine messerartige Kante wie im Fall der Ausführungsform nach den Figuren 4 und 5, sondern eine an die konkave Stirnkontur 24 radial nach innen anschließende kurze ringförmige Schrägfläche 50, mit der die austretende Dichtungsmasse im Wesentlichen abgeschält wird. Dieser Vorgang spielt sich zwischen der Position der Formteile auf der linken Seite von Figur 6 und der Formteile auf der rechten Seite von Figur 6 ab. Das innere Formteil hat im Übrigen unterhalb des Austrittsspalts 2a einen sich nach unten konisch erweiternden Abschnitt 52, wobei die ringförmige Schrägfläche 50 an die Außenkontur des konischen Abschnitts 52 angepasst ist, wie sich aus der Darstellung rechts in Figur 6 ergibt. In der Endposition des äußeren Formteils 44a liegt daher die Fläche 50 an der Außenseite des konischen Abschnitts 52 an.

Soweit in Figur 7 mit der Ausführungsform in den Figuren 4 und 5 gleiche Teile verwendet werden, werden gleiche Bezugszeichen verwendet, denen ggf. ein "b" hinzugefügt ist. Der Austrittsspalt 42b hat einen relativ geringen Querschnitt. Unterhalb des Austrittsspalts 42b ist das Formteil 40b wiederum mit einem konischen Abschnitt 52 versehen. Das äußere Formteil 44b, das das innere Formteil 40b umgibt, erstreckt sich radial nur im Abstand zur Deckelwand 12. Zwischen äußerem Formteil 44b und Deckelwand 12 ist ein weiteres Formteil 44c angeordnet, das gleichsinnig mit dem äußeren Formteil 44b axial beweglich ist. Das äußere Formteil 44b wirkt wie der Abstreifer bzw. das äußere Formteil 44a gemäß Figur 6. Beide äußeren Formteile 44b und 44c bilden mit ihren Stirnflächen gemeinsam die im Querschnitt konkave Kontur 28 gemäß Figuren 4 und 5. Mit der ringförmigen Schrägfläche des äußeren Formteils 44b wird das Material aus dem relativ kleinen Austrittsspalt 42b im Wesentlichen abgequetscht. Entscheidend ist jedoch die Verformung der Dichtungsmasse derart, dass sie mit den beiden äußeren Formteilen 44b und 44c im Deckelboden so verformt wird, dass der Bereich des Übergangsradius R ohne Lufteinschlüsse ausgefüllt wird.

## Patentansprüche

1. Verfahren zum Aufbringen einer Dichtungsmasse auf den Boden und die Innenseite einer ringförmigen Wand eines Deckels für Behälter, wobei am Übergang von Deckelboden und Deckelwand ein Übergangsradius vorhanden ist, mit den folgenden Schritten:
- in einem ersten Schritt wird ein ringförmiges Gebilde (30) aus der Dichtungsmasse mithilfe eines Applikators auf den Deckelboden (10) abgelegt, wobei die Dichtungsmasse über Kanäle (2) und einen Austrittsspalt (42) eines gegen den Deckelboden (10) führbaren inneren Formteils (40) ausgepresst und mittels eines, das innere Formteil (40) umgebenden, koaxial zum inneren Formteil (40) beweglichen äußeren Formteils (44) am Austrittsspalt (42) von der zugeführten Dichtungsmasse abgetrennt und mit der Stirnfläche des äußeren Formteils (44) gegen den ringförmigen Deckelboden (10) gedrückt wird;
- in einem zweiten Schritt wird das ringartige Gebilde (30) aus plastifizierter Dichtungsmasse mittels eines ringförmigen Pressstempels (20), der ein inneres zweites Formteil (18) umgibt, flach auf den Deckelboden (10) und an die sich an den Deckelboden (10) anschließende Deckelwand (12) gepresst,
- **dadurch gekennzeichnet, dass** im ersten Schritt mithilfe der Stirnfläche des äußeren Formteils (44) des Applikators über einen sich radial nach außen zum Deckelboden (10) hin verengenden Spalt die Dichtungsmasse unter Vermeidung von Lufteinschlüssen radial nach außen in den Bereich des Übergangsradius (R) gedrückt wird.

2. Verfahren zum Aufbringen einer Dichtungsmasse auf den Boden und die Innenseite einer ringförmigen Wand eines Deckels für Behälter, wobei ein Übergang von Deckelboden und Deckelwand ein Übergangsradius vorhanden ist, mit den folgenden Schritten:
- in einem ersten Schritt wird ein erstes ringförmiges Gebilde (30) aus der Dichtungsmasse mit Hilfe eines Applikators auf den Deckelboden (10) abgelegt,
- wobei in einem zweiten Schritt das erste ringartige Gebilde (30) aus plastifizierter Dichtungsmasse mittels eines ringförmigen ersten Pressstempels (21), der ein inneres Formteil (18) umgibt, gegen den Deckelboden (10) gepresst wird, wobei mit Hilfe der Stirnfläche des ersten Pressstempels (21) über einen sich radial nach außen zum Deckelboden (10) hin verengenden Spalt die Dichtungsmasse als zweites ringförmiges Gebilde (28) unter Vermeidung von Lufteinschlüssen radial nach außen in dem Bereich des Übergangsradius (R) zwischen Deckelboden (10) und Deckelwand (12) gedrückt wird und
- in einem dritten Schritt das im zweiten Schritt erzeugte zweite ringförmige Gebilde (28) mit Hilfe eines zweiten Pressstempels (20) flach gegen den Deckelboden (10) und in den Spalt zwischen Deckelwand (12) und zweitem Pressstempel (20) gepresst wird.

3. Verfahren nach Anspruch 1 oder 2, **dadurch gekennzeichnet, dass** die Dichtungsmasse über den im Querschnitt radial nach außen stetig enger werdenden Austrittsspalt (42) zwischen der Stirnfläche und Deckelboden (10) gedrückt wird.

4. Verfahren nach einem der Ansprüche 1 bis 3, **dadurch gekennzeichnet, dass** ein enger Spalt zwischen äußerem Formteil (44) bzw. erstem Pressstempel (21) und Deckelwand (12) eingehalten wird.

5. Verfahren nach einem der Ansprüche 1 bis 4, **dadurch gekennzeichnet, dass** der ringförmige Pressstempel (20) zwischen einem radial innen vom Pressstempel (20) angeordneten, inneren Formteil und einem radial außen vom Pressstempel (20) angeordneten und einen ringförmigen Spalt zum Deckelboden (10) bildenden, ringförmigen äußeren Formteil in Richtung des Deckelbodens (10) auf das ringartige Gebilde (30) aus plastifizierter Dichtungsmasse gepresst wird, wobei die plastifizierte Dichtungsmasse in den Spalt und radial nach außen durch den ringförmigen Spalt auf den Deckelboden (10) und an die sich an den Deckelboden (10) anschließende Deckelwand (12) gepresst wird.

6. Vorrichtung zum Aufbringen einer Dichtungsmasse auf den Boden und die Innenseite einer ringförmigen Wand eines Deckels für Behälter, wobei im Übergang von Deckelboden und Deckelwand ein Übergangsradius vorhanden ist, umfassend folgende Merkmale:
- einen Applikator, mit einem gegen den Deckelboden (10) führbaren, Kanäle (2) und einen Austrittsspalt (42) für die Dichtungsmasse aufweisenden inneren Formteil (40) und einem das innere Formteil (40) umgebenden, äußeren Formteil (44), das koaxial zum inneren Formteil (40) axial bewegbar ist zum Abtrennen der aus dem Austrittsspalt (42) austretenden Dichtungsmasse und Andrücken derselben an den Deckelboden (10) mit seiner Stirnfläche,
- eine Pressvorrichtung mit einem zweiten inneren Formteil (18), das gegen den Deckelboden (10) führbar und von einem ringförmigen Pressstempel (20) umgeben ist, der koaxial zum zweiten inneren Formteil (40) bewegbar ist, zum Verpressen der Dichtungsmasse flächig gegen Deckelboden (10) und Deckelwand,
- **dadurch gekennzeichnet, dass** der Querschnitt der Stirnfläche des äußeren Formteils (44) des Applikators dachförmig ist mit einer radial inneren Schrägfläche (22) und einer radial äußeren Schrägfläche (24), wobei zwischen den Schrägflächen (22, 24) eine gerundete Übergangsfläche (26) vorhanden ist, so dass die Dichtungsmasse beim Andrücken der Dichtungsmasse radial nach außen in den Bereich des Übergangsradius R zwischen Deckelboden (10) und Deckelwand (12) gedrückt wird.

7. Vorrichtung zum Aufbringen einer Dichtungsmasse auf den Boden und die Innenseite einer ringförmigen Wand eines Deckels für Behälter, wobei im Übergang von Deckelboden und Deckelwand ein Übergangsradius vorhanden ist, umfassend folgende Merkmale:
- einen Applikator mit Mitteln zum Aufbringen eines ringförmigen Gebildes (30) auf den Deckelboden (10),
- eine zweite Pressvorrichtung mit einem zweiten inneren Formteil (18), das gegen den Deckelboden (10) führbar und von einem ringförmigen zweiten Pressstempel umgeben ist, der koaxial zum zweiten inneren Formteil (18) bewegbar ist zum Verpressen der Dichtungsmasse flach gegen Deckelboden (10) und Deckelwand (12),
- **gekennzeichnet durch** eine erste Pressvorrichtung mit einem ersten inneren Formteil (18), das gegen den Deckelboden (10) führbar und von einem ringförmigen ersten Pressstempel (21) umgeben ist, der koaxial zum inneren Formteil (18) bewegbar ist, zum Verpressen der Dichtungsmasse gegen den Deckelboden (10), wobei der Querschnitt der Stirnfläche des ersten Pressstempels (21) so geformt ist, dass die Dichtungsmasse beim Verpressen radial nach außen in den Bereich des Übergangsradius R zwischen Deckelboden und Deckelwand (12) gedrückt wird.

8. Vorrichtung nach Anspruch 6 oder 7, weiter umfassend einen Deckel für Behälter mit einem Boden und einer Innenseite einer ringförmigen Wand, wobei im Übergang von Deckelboden und Deckelwand ein Übergangsradius vorhanden ist, **dadurch gekennzeichnet, dass** die Stirnfläche des äußeren Formteils oder des ersten Pressstempels im Querschnitt so geformt ist, vorzugsweise konkav, dass der Ringspalt zwischen Stirnfläche und Deckelboden (10) radial nach außen stetig kleiner wird und der radiale Austritt des Ringspalts in der unteren Endposition des äußeren Formteils (44) oder Pressstempels den Bereich des Übergangsradius R überdeckt.

9. Vorrichtung nach Anspruch 7, **dadurch gekennzeichnet, dass** die Stirnfläche im Querschnitt dachförmig ist mit einer radial inneren Schrägfläche (22) und einer radial äußeren Schrägfläche (24), wobei zwischen den Schrägflächen (22, 24) eine gerundete Übergangsfläche (26) vorhanden ist.

10. Vorrichtung nach Anspruch 6 oder 9, **dadurch gekennzeichnet, dass** die gerundete Übergangsfläche (26) gegenüber der Mitte des ringförmigen äußeren Formteils (44) radial nach innen versetzt liegt.

11. Vorrichtung nach Anspruch 6 oder 9 oder 10, **dadurch gekennzeichnet, dass** eine messerartige Kante (34) zwischen innerer Schrägfläche (22) und Innenseite des äußeren Formteils (44) gebildet ist.

12. Vorrichtung nach Anspruch 6, **dadurch gekennzeichnet, dass** der Austrittsspalt (42a) nahe dem unteren Ende des inneren Formteils (40a) angeordnet ist und einen relativ großen Querschnitt aufweist und das äußere Formteil (44a) so ausgebildet ist, dass die austretende Dichtungsmasse abgeschält wird.

13. Vorrichtung nach Anspruch 6, **dadurch gekennzeichnet, dass** der Austrittsspalt (42b) einen relativ kleinen Querschnitt hat und das äußere Formteil (44b) so ausgebildet ist, dass es die austretende Dichtungsmasse abquetscht.

14. Vorrichtung nach einem der Ansprüche 6, 12 oder 13, **dadurch gekennzeichnet, dass** das innere Formteil (40a, 40b) unterhalb des Austrittsspalts (42a, 42b) einen sich nach unten erweiternden konischen Abschnitt (52) aufweist und das äußere Formteil (44a, 44b) am unteren Ende eine an den konischen Abschnitt (52) angepasste schräge Ringfläche (50a, 50b) aufweist.

15. Vorrichtung nach einem der Ansprüche 6 oder 12 bis 14, **dadurch gekennzeichnet, dass** das äußere Formteil (44b) von einem weiteren ringförmigen Formteil (44c) umgeben ist, das axial beweglich an die Deckelwand (12) angrenzt und die untere Stirnfläche vom äußeren Formteil (44b) und von dem weiteren Formteil (44c) zusammen im Querschnitt die Fläche bilden, die beim Andrücken der Dichtungsmasse an den Deckelboden diese radial nach außen in den Bereich des Übergangsradius R zwischen Deckelboden und Deckelwand drückt.

## Claims

1. A method for applying a sealing compound to the base and the inner side of an annular wall of a cover for containers, wherein a transition radius is provided at the transition between the cover base and the cover wall, said method having the following steps:
- in a first step, an annular structure (30) of the sealing compound is deposited onto the cover base (10) with the aid of an applicator, wherein the sealing compound is pressed out via channels (2) and an exit gap (42) of an inner forming part (40) which can be guided against the cover base (10) and is cut off from the supplied sealing compound at the exit gap (42) by means of an outer forming part (44) which surrounds the inner forming part (40) and which can be moved coaxially with the inner forming part (40) and is pressed with the end face of the outer forming part (44) against the annular cover base (10);
- in a second step, the ring-like structure (30) of plasticized sealing compound is pressed flat onto the cover base (10) and onto the cover wall (12) adjoining the cover base (10) by means of an annular press ram (20) which surrounds an inner second forming part (18),
- **characterized in that**, in the first step, the sealing compound is pressed radially outwards into the region of the transition radius (R) with the aid of the end face of the outer forming part (44) of the applicator via a gap which narrows radially outwards towards the cover base (10), avoiding air inclusions.

2. A method for applying a sealing compound to the base and the inner side of an annular wall of a cover for containers, wherein a transition radius is provided at the transition between the cover base and the cover wall, said method having the following steps:
- in a first step, a first annular structure (30) of the sealing compound is deposited onto the cover base (10) with the aid of an applicator,
- wherein, in a second step, the first ring-like structure (30) of plasticized sealing compound is pressed against the cover base (10) by means of an annular first press ram (21) which surrounds an inner forming part (18), wherein the sealing compound, as the second annular structure (28), is pressed radially outwards in the region of the transition radius (R) between the cover base (10) and the cover wall (12) with the aid of the end face of the first press ram (21) over a gap which narrows radially outwards towards the cover base (10), avoiding air inclusions, and
- in a third step, the second annular structure (28) produced in the second step is pressed flat against the cover base (10) and into the gap between the cover wall (12) and the second press ram (20) with the aid of a second press ram (20).

3. The method according to Claim 1 or 2, **characterized in that** the sealing compound is pressed via the exit gap (42) which steadily narrows radially outwards in cross-section between the end face and the cover base (10).

4. The method according to one of Claims 1 to 3, **characterized in that** a narrow gap is observed between the outer forming part (44) or the first press ram (21) and the cover wall (12).

5. The method according to one of Claims 1 to 4, **characterized in that** the annular press ram (20) is pressed in the direction of the cover base (10) onto the ring-like structure (30) of plasticized sealing compound between an inner forming part arranged radially inwards of the press ram (20) and an annular outer forming part arranged radially outwards of the press ram (20) and forming an annular gap to the cover base (10), wherein the plasticized sealing compound is pressed into the gap and radially outwards through the annular gap onto the cover base (10) and onto the cover wall (12) adjoining the cover base (10).

6. A device for applying a sealing compound to the base and the inner side of an annular wall of a cover for containers, wherein a transition radius is provided in the transition between the cover base and the cover wall, said device comprising the following features:
- an applicator, having an inner forming part (40) which can be guided against the cover base (10) and having channels (2) and an exit gap (42) for the sealing compound, and an outer forming part (44) which surrounds the inner forming part (40) and which can be axially moved coaxially with the inner forming part (40) in order to cut off the sealing compound escaping from the exit gap (42) and to press the same onto the cover base (10) with its end face,
- a pressing device having a second inner forming part (18) which can be guided against the cover base (10) and is surrounded by an annular press ram (20) which can be moved coaxially with the second inner forming part (40), in order to press the sealing compound in a planar manner against the cover base (10) and the cover wall,
- **characterized in that** the cross-section of the end face of the outer forming part (44) of the applicator is roof-shaped, having a radially inner inclined surface (22) and a radially outer inclined surface (24), wherein a rounded transition surface (26) is provided between the inclined surfaces (22, 24) such that the sealing compound is pressed radially outwards into the region of the transition radius R between the cover base (10) and the cover wall (12) when the sealing compound is pressed on.

7. A device for applying a sealing compound to the base and the inner side of an annular wall of a cover for containers, wherein a transition radius is provided in the transition between the cover base and the cover wall, said device comprising the following features:
- an applicator having means for applying an annular structure (30) to the cover base (10),
- a second pressing device having a second inner forming part (18) which can be guided against the cover base (10) and is surrounded by an annular second press ram which can be moved coaxially with the second inner forming part (18) in order to press the sealing compound flat against the cover base (10) and the cover wall (12),
- **characterized by** a first pressing device having a first inner forming part (18) which can be guided against the cover base (10) and is surrounded by an annular first press ram (21) which can be moved coaxially with the inner forming part (18), in order to press the sealing compound against the cover base (10), wherein the cross-section of the end face of the first press ram (21) is shaped such that the sealing compound is pressed radially outwards into the region of the transition radius R between the cover base and the cover wall (12) during pressing.

8. The device according to Claim 6 or 7, further comprising a cover for containers having a base and an inner side of an annular wall, wherein a transition radius is provided in the transition between the cover base and the cover wall, **characterized in that** the end face of the outer forming part or the first press ram is shaped in cross-section, preferably concave, in such a way that the annular gap between the end face and the cover base (10) steadily becomes smaller radially outwards and the radial exit of the annular gap in the lower end position of the outer forming part (44) or press ram covers the region of the transition radius R.

9. The device according to Claim 7, **characterized in that** the end face is roof-shaped in cross-section having a radially inner inclined surface (22) and a radially outer inclined surface (24), wherein a rounded transition surface (26) is provided between the inclined surfaces (22, 24).

10. The device according to Claim 6 or 9, **characterized in that** the rounded transition surface (26) is located radially inwardly offset with respect to the center of the annular outer forming part (44).

11. The device according to Claim 6 or 9 or 10, **characterized in that** a knife-like edge (34) is formed between the inner inclined surface (22) and the inner side of the outer forming part (44).

12. The device according to Claim 6, **characterized in that** the exit gap (42a) is arranged near the lower end of the inner forming part (40a) and has a relatively large cross-section and the outer forming part (44a) is configured such that the escaping sealing compound is peeled off.

13. The device according to Claim 6, **characterized in that** the exit gap (42b) has a relatively small cross-section and the outer forming part (44b) is configured such that it squeezes off the escaping sealing compound.

14. The device according to one of Claims 6, 12 or 13, **characterized in that** the inner forming part (40a, 40b) has a downwardly widening conical section (52) below the exit gap (42a, 42b) and the outer forming part (44a, 44b) has an inclined annular surface (50a, 50b) at the lower end adapted to the conical section (52).

15. The device according to one of Claims 6 or 12 to 14, **characterized in that** the outer forming part (44b) is surrounded by a further annular forming part (44c) which is axially movably adjacent to the cover wall (12) and the lower end face of the outer forming part (44b) and of the further forming part (44c) together form the surface in cross-section which, when the sealing compound is pressed onto the cover base, presses the latter radially outwards into the region of the transition radius R between the cover base and the cover wall.

## Revendications

1. Procédé pour l'application d'une masse d'étanchéité sur le fond et le côté intérieur d'une paroi annulaire d'un couvercle de récipient, dans lequel il est prévu un rayon de transition au niveau de la transition entre le fond de couvercle et la paroi de couvercle, comprenant les étapes suivantes :
dans une première étape, une structure annulaire (30) constituée de la masse d'étanchéité est déposée sur le fond de couvercle (10) à l'aide d'un applicateur, la masse d'étanchéité étant pressée par le biais de canaux (2) et d'une fente de sortie (42) d'un moule intérieur (40) apte à être placé contre le fond de couvercle (10) et séparée de la masse d'étanchéité alimentée au niveau de la fente de sortie (42) au moyen d'un moule extérieur (44) entourant le moule intérieur (40) et déplaçable coaxialement par rapport au moule intérieur (40) et poussée avec la surface frontale du moule extérieur (44) contre le fond de couvercle annulaire (10) ;
dans une deuxième étape, la structure en anneau (30) en masse d'étanchéité plastifiée est pressée à plat sur le fond de couvercle (10) et sur la paroi de couvercle (12) prolongeant le fond de couvercle (10) au moyen d'un poinçon de pressage annulaire (20) entourant un deuxième moule intérieur (18),
**caractérisé en ce que** dans la première étape, la masse d'étanchéité est poussée radialement vers l'extérieur dans la région du rayon de transition (R) à l'aide de la surface frontale du moule extérieur (44) de l'applicateur, par le biais d'une fente se rétrécissant radialement vers l'extérieur vers le fond de couvercle (10), en évitant les inclusions d'air.

2. Procédé pour l'application d'une masse d'étanchéité sur le fond et le côté intérieur d'une paroi annulaire d'un couvercle de récipient, dans lequel il est prévu un rayon de transition au niveau de la transition entre le fond de couvercle et la paroi de couvercle, comprenant les étapes suivantes :
dans une première étape, une première structure annulaire (30) constituée de la masse d'étanchéité est déposée sur le fond de couvercle (10) à l'aide d'un applicateur,
dans lequel, dans une deuxième étape, la première structure en anneau (30) en masse d'étanchéité plastifiée est pressée contre le fond de couvercle (10) au moyen d'un premier poinçon de pressage annulaire (21) entourant un moule intérieur (18), dans lequel la masse d'étanchéité en tant que deuxième structure annulaire (28) est poussée radialement vers l'extérieur dans la région du rayon de transition (R) entre le fond de couvercle (10) et la paroi de couvercle (12), à l'aide de la surface frontale du premier poinçon de pressage (21), par le biais d'une fente se rétrécissant radialement vers l'extérieur vers le fond de couvercle (10), en évitant les inclusions d'air, et
dans une troisième étape, la deuxième structure annulaire (28) réalisée dans la deuxième étape est pressée à l'aide d'un deuxième poinçon de pressage (20) à plat contre le fond de couvercle (10) et dans la fente entre la paroi de couvercle (12) et le deuxième poinçon de pressage (20).

3. Procédé selon la revendication 1 ou 2, **caractérisé en ce que** la masse d'étanchéité est poussée entre la surface frontale et le fond de couvercle (10) par le biais de la fente de sortie (42) dont la section transversale devient de plus en plus étroite radialement vers l'extérieur.

4. Procédé selon l'une des revendications 1 à 3, **caractérisé en ce qu'**une fente étroite est maintenue entre le moule extérieur (44) ou le premier poinçon de pressage (21) et la paroi de couvercle (12).

5. Procédé selon l'une des revendications 1 à 4, **caractérisé en ce que** le poinçon de pressage annulaire (20) est pressé vers le fond de couvercle (10) sur la structure en anneau (30) en masse d'étanchéité plastifiée, entre un moule intérieur disposé radialement à l'intérieur du poinçon de pressage (20) et un moule extérieur annulaire disposé radialement à l'extérieur du poinçon de pressage (20) et formant une fente annulaire par rapport au fond de couvercle (10), dans lequel la masse d'étanchéité plastifiée est pressée dans la fente et radialement vers l'extérieur à travers la fente annulaire sur le fond de couvercle (10) et sur la paroi de couvercle (12) prolongeant le fond de couvercle (10).

6. Dispositif pour l'application d'une masse d'étanchéité sur le fond et le côté intérieur d'une paroi annulaire d'un couvercle de récipient, dans lequel il est prévu un rayon de transition au niveau de la transition entre le fond de couvercle et la paroi de couvercle, comportant les caractéristiques suivantes :
un applicateur doté d'un moule intérieur (40) apte à être placé contre le fond de couvercle (10) et présentant des canaux (2) et une fente de sortie (42) pour la masse d'étanchéité, ainsi que d'un moule extérieur (44) entourant le moule intérieur (40), lequel est déplaçable de façon axiale coaxialement par rapport au moule intérieur (40) pour séparer la masse d'étanchéité sortant par la fente de sortie (42) et pousser celle-ci contre le fond de couvercle (10) avec sa surface frontale,
un dispositif de pressage doté d'un deuxième moule intérieur (18) apte à être placé contre le fond de couvercle (10) et entouré par un poinçon de pressage annulaire (20) déplaçable coaxialement par rapport au deuxième moule intérieur (40), pour le pressage de la masse d'étanchéité à plat contre le fond de couvercle (10) et la paroi de couvercle,
**caractérisé en ce que** la section transversale de la surface frontale du moule extérieur (44) de l'applicateur est en forme de toit avec une surface oblique radialement intérieure (22) et une surface oblique radialement extérieure (24), dans lequel il est prévu une surface de transition arrondie (26) entre les surfaces obliques (22, 24), de sorte que lors de la poussée de la masse d'étanchéité, la masse d'étanchéité est poussée radialement vers l'extrémité dans la région du rayon de transition R entre le fond de couvercle (10) et la paroi de couvercle (12).

7. Dispositif pour l'application d'une masse d'étanchéité sur le fond et le côté intérieur d'une paroi annulaire d'un couvercle de récipient, dans lequel il est prévu un rayon de transition au niveau de la transition entre le fond de couvercle et la paroi de couvercle, comportant les caractéristiques suivantes :
un applicateur doté de moyens permettant d' appliquer une structure annulaire (30) sur le fond de couvercle (10),
un deuxième dispositif de pressage doté d'un deuxième moule intérieur (18) apte à être placé contre le fond de couvercle (10) et entouré par un deuxième poinçon de pressage annulaire, lequel est déplaçable coaxialement par rapport au deuxième moule intérieur (18) pour presser la masse d'étanchéité à plat contre le fond de couvercle (10) et la paroi de couvercle (12),
**caractérisé par** un premier dispositif de pressage doté d'un premier moule intérieur (18) apte à être placé contre le fond de couvercle (10) et entouré par un premier poinçon de pressage annulaire (21), lequel est déplaçable coaxialement par rapport au moule intérieur (18) pour presser la masse d'étanchéité contre le fond de couvercle (10), dans lequel la section transversale de la surface frontale du premier poinçon de pressage (21) est formée de telle façon que lors du pressage, la masse d'étanchéité est poussée radialement vers l'extérieur dans la région du rayon de transition R entre le fond de couvercle et la paroi de couvercle (12).

8. Dispositif selon la revendication 6 ou 7, comportant en outre un couvercle de récipient doté d'un fond et d'un côté intérieur d'une paroi annulaire, dans lequel il est prévu un rayon de transition au niveau de la transition entre le fond de couvercle et la paroi de couvercle, **caractérisé en ce que** la surface frontale du moule extérieur ou du premier poinçon de pressage est formée de telle façon dans sa section transversale, de préférence concave, que la fente annulaire entre la surface frontale et le fond de couvercle (10) devient de plus en plus petite radialement vers l'extérieur et la sortie radiale de la fente annulaire recouvre la région du rayon de transition R dans la position finale inférieure du moule extérieur (44) ou du poinçon de pressage.

9. Dispositif selon la revendication 7, **caractérisé en ce que** la surface frontale présente une section transversale en forme de toit, avec une surface oblique radialement intérieure (22) et une surface oblique radialement extérieure (24), dans lequel il est prévu une surface de transition arrondie (26) entre les surfaces obliques (22, 24).

10. Dispositif selon la revendication 6 ou 9, **caractérisé en ce que** la surface de transition arrondie (26) s'étend de façon décalée radialement vers l'intérieur par rapport au milieu du moule extérieur annulaire (44).

11. Dispositif selon la revendication 6 ou 9 ou 10, **caractérisé en ce qu'**une arête du genre lame (34) est formée entre la surface oblique intérieure (22) et le côté intérieur du moule extérieur (44).

12. Dispositif selon la revendication 6, **caractérisé en ce que** la fente de sortie (42a) est disposée à proximité de l'extrémité inférieure du moule intérieur (40a) et présente une section transversale relativement grande et le moule extérieur (44a) est formé de telle façon que la masse d'étanchéité sortante est décollée.

13. Dispositif selon la revendication 6, **caractérisé en ce que** la fente de sortie (42b) possède une section transversale relativement petite et le moule extérieur (44b) est formé de manière à exprimer la masse d'étanchéité sortante.

14. Dispositif selon l'une des revendications 6, 12 ou 13, **caractérisé en ce que** le moule intérieur (40a, 40b) présente une section conique s'élargissant vers le bas (52) sous la fente de sortie (42a, 42b) et le moule extérieur (44a, 44b) présente une surface annulaire oblique (50a, 50b) adaptée à la section conique (52) à l'extrémité inférieure.

15. Dispositif selon l'une des revendications 6 ou 12 à 14, **caractérisé en ce que** le moule extérieur (44b) est entouré par un moule annulaire supplémentaire (44c), lequel jouxte la paroi de couvercle (12) de façon axialement déplaçable, et **en ce que** dans leur section transversale, la surface frontale inférieure du moule extérieur (44b) et celle du moule supplémentaire (44c) forment conjointement la surface chargée de pousser la masse d'étanchéité radialement vers l'extérieur dans la région du rayon de transition R entre le fond de couvercle et la paroi de couvercle lors de la poussée de la masse d'étanchéité contre le fond de couvercle.
